# FASCICULE DE BREVET EUROPEEN

(11) **EP 3 267 081 B1**
(45) Date de publication et mention de la délivrance du brevet: **26.06.2019**
(21) Numéro de dépôt: 17180133.5
(22) Date de dépôt: 06.07.2017
(51) Int. Cl.: F16K 15/14, E03F 7/04, E03F 5/042, E03C 1/298

(54) **CLAPET ANTI-ODEUR**
GERUCHSVERSCHLUSS
ANTI-ODOUR VALVE

(30) Priorité: 06.07.2016 FR 1656477
(43) Date de publication de la demande: 10.01.2018
(73) Titulaire: Norham, 26260 Saint-Donat-sur-l'Herbasse (FR)
(72) Inventeur: MICHEL, François, 26260 Saint Donat (FR); LAMBERTON, Mikaël, 26260 Arthemonay (FR); NOGUES, Sacha, 26270 Mirmande (FR)
(74) Mandataire: Talbot, Alexandre

(56) Documents cités:
- EP-A1- 2 837 748
- WO-A1-2006/047835
- JP-A- S62 220 778
- KR-B1- 101 037 683
- US-A- 1 057 435

## Description

### Domaine technique de l'invention

L'invention est relative à un clapet anti-odeur monté sur des canalisations, en particulier des canalisations d'eaux usées.

### État de la technique

Dans de nombreuses villes, le circuit d'évacuation des eaux pluviales est commun avec le circuit d'évacuation des eaux usées. Le circuit d'évacuation des eaux pluviales comporte généralement un bassin où l'eau s'accumule. Une canalisation communique avec le bassin et débouche sur le circuit d'évacuation des eaux usées.

Si le réseau reliant le bassin au circuit d'évacuation des eaux usées n'a pas d'élément siphoïde ou s'il est amené à s'assécher (évaporation naturelle, forte chaleur, etc.), les odeurs du réseau d'eaux usées peuvent remonter à la surface. Ce phénomène est très désagréable pour les usagers, et peut notamment porter préjudice à l'économie locale si la ville acquiert une mauvaise réputation en raison de son odeur nauséabonde.

Le document KR10 1037 683 traite d'un clapet anti-odeur muni de trois films qui se chevauchent. Les films sont fixés dans la partie inférieure d'un support au moyen d'un connecteur qui déforme les films pour les engager dans une nervure.

Le document US 1057435 divulgue un clapet anti-odeur qui comprend un obturateur rigide.

### Objet de l'invention

Un objet de l'invention consiste à remédier à ces inconvénients, et à réaliser un clapet anti-odeur qui puisse facilement être monté sur une canalisation d'eau pluviale, qui permette l'évacuation des eaux pluviales vers le circuit d'évacuation des eaux usées, et qui empêche l'émission de mauvaises odeurs en provenance du circuit d'évacuation des eaux usées.

A cet effet, le clapet anti-odeur comporte :
- un corps cylindrique comprenant une première extrémité biseautée dotée de première et deuxième zones opposées,
- au moins une première membrane et une deuxième membrane agencées de sorte à pouvoir obstruer complètement la première extrémité du corps,
- la première membrane étant configurée pour obstruer partiellement la première extrémité biseautée dans la première zone, la première membrane étant montée mobile en rotation suivant un premier axe orthogonal à l'axe longitudinal du corps,
- la deuxième membrane étant configurée pour obstruer au moins partiellement la première extrémité biseautée, la deuxième membrane étant montée mobile en rotation selon un deuxième axe orthogonal à l'axe longitudinal du corps, le deuxième axe étant placé dans la deuxième zone,
la première membrane étant configurée pour autoriser la rotation de la deuxième membrane selon le deuxième axe,

Selon un mode de réalisation, la première membrane peut obstruer complètement la première extrémité biseautée.

Par ailleurs, le corps cylindrique peut être séparé de la première membrane par la deuxième membrane.

Selon un aspect de l'invention, la première extrémité biseautée peut former un angle compris entre 5 et 45 degrés par rapport à un plan orthogonal à l'axe longitudinal du corps cylindrique, préférentiellement compris entre 10 et 45 degrés, et idéalement égal à 15 degrés. Cette gamme angulaire est optimale pour permettre une bonne évacuation des eaux pluviales, et un blocage efficace des odeurs.

Les première et deuxième membranes peuvent être réalisées dans un matériau souple choisi parmi les élastomères, et préférentiellement parmi le caoutchouc styrène-butadiène, le caoutchouc d'éthylène-propylène-diène, les élastomères thermoplastiques et les élastomères fluorés. Il en va de même pour le corps cylindrique.

Le clapet anti-odeur peut par ailleurs comprendre un rebord positionné à une deuxième extrémité du corps cylindrique opposée à la première extrémité. Le rebord peut être réalisé dans un matériau identique au matériau du corps cylindrique. Le rebord permet de faciliter le positionnement du clapet anti-odeur dans la canalisation d'évacuation des eaux pluviales.

Selon un mode de réalisation particulier, le clapet anti-odeur peut comprendre une troisième membrane positionnée entre les première et deuxième membranes,
- la troisième membrane étant montée mobile en rotation selon un troisième axe orthogonal à l'axe longitudinal du corps, le troisième axe étant placé dans une troisième zone comprise entre la première zone et la deuxième zone,
- la première membrane et la troisième membrane étant configurées pour autoriser la rotation de la deuxième membrane selon le deuxième axe,
- la première membrane étant configurée pour autoriser la rotation de la troisième membrane selon le troisième axe,
- la première membrane, la deuxième membrane et la troisième membrane étant agencées de sorte à pouvoir obstruer complètement la première extrémité du corps.

La troisième membrane peut être réalisée dans un matériau identique au matériau des première et deuxième membranes.

Afin de faciliter la mise en place du clapet anti-odeur, celui peut être muni d'une bague positionnée sur la paroi interne du corps cylindrique, la bague étant configurée pour assurer l'étanchéité du clapet anti-odeur lorsqu'il est positionné dans une canalisation.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 à 3 représentent schématiquement un mode de réalisation du clapet anti-odeur en position fermée, respectivement en vue de côté, en vue de profil, et en vue de profil en représentation filaire,
- les figures 4 à 6 représentent schématiquement un mode de réalisation du clapet anti-odeur en position partiellement ouverte, respectivement en vue de côté, en vue de profil, et en vue de profil en représentation filaire,
- les figures 7 à 9 représentent schématiquement un mode de réalisation du clapet anti-odeur en position ouverte, respectivement en vue de côté, en vue de profil, et en vue de profil en représentation filaire.

### Description détaillée

Pour éviter la diffusion de mauvaises odeurs en provenance d'un circuit d'évacuation des eaux usées, il est possible d'équiper la canalisation d'évacuation des eaux pluviales d'un clapet anti-odeur 1.

Le clapet anti-odeur 1 peut être réalisé sous différentes formes afin de s'adapter au type de canalisation pour lequel il est prévu. Il peut par exemple avoir une section carrée ou ovale, même s'il a la plupart du temps une section circulaire. Le clapet anti-odeur 1 peut également être réalisé dans différentes tailles afin de s'adapter à la dimension des canalisations dans lesquelles il doit être installé. Le clapet anti-odeur 1 qui est décrit ici est configuré pour être connecté à une canalisation cylindrique.

Le clapet anti-odeur 1 comporte un corps cylindrique 2 doté d'une première extrémité biseautée 3, et d'une deuxième extrémité 4 opposée à la première extrémité 3. Selon le mode de réalisation illustré sur les figures, la deuxième extrémité 4 peut être comprise dans un plan orthogonal à l'axe longitudinal AA du corps cylindrique 2. En alternative, l'axe longitudinal est remplacé par la génératrice du cylindre. Il pourrait être envisagé cependant que la deuxième extrémité 4 soit également biseautée sans que cela ne nuise au bon fonctionnement du clapet anti-odeur 1. Il est particulièrement avantageux d'utiliser une deuxième extrémité définissant un plan orthogonal à l'axe longitudinal AA ou à la génératrice car cela permet de former un clapet compact.

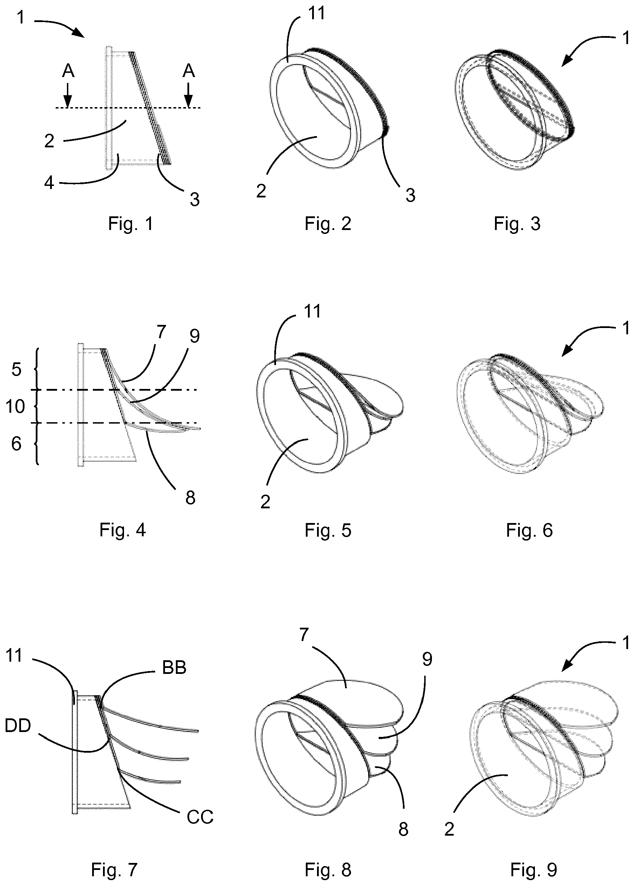

La première extrémité 3 du corps cylindrique 2 peut comprendre des première et deuxième zones 5 et 6 opposées l'une à l'autre, par exemple diamétralement opposées par rapport à l'axe longitudinal AA du corps cylindrique 2. La première zone 5 peut par exemple être définie comme une zone où la longueur du corps cylindrique 2 selon l'axe longitudinal AA est minimale, tandis que la deuxième zone 6 est définie comme une zone où la longueur du corps cylindrique 2 selon l'axe longitudinal AA est maximale, les longueurs minimale et maximale du corps cylindrique 2 étant diamétralement opposées par rapport à l'axe longitudinal AA. Ce mode de réalisation est celui illustré sur les figures 1 à 9.

Pour éviter le passage des mauvaises odeurs tout en permettant l'évacuation des eaux pluviales, la première extrémité 3 du corps cylindrique 2 est équipée d'au moins des première et deuxième membranes 7 et 8 agencées de sorte à obstruer complètement la première extrémité 3. De cette manière, les mauvaises odeurs se trouvant dans la canalisation ne peuvent pas sortir.

Les première et deuxième membranes sont montées mobiles en rotation. De cette manière, elles se déplacent en fonction du débit de fluide qui appuie sur les membranes en provenance de la deuxième extrémité.

La première membrane 7 est configurée pour obstruer au moins partiellement la première extrémité 3 dans la première zone 5, et elle est montée mobile en rotation suivant un premier axe BB orthogonal à l'axe longitudinal du corps cylindrique 2. Plus le premier axe BB est placé près du bord périphérique du corps et plus l'ouverture maximale de la zone d'obstruction est importante. Le premier axe BB peut par exemple être positionné au voisinage de l'extrémité où le corps 2 a une longueur minimale, de sorte à permettre une ouverture maximale de la première extrémité 3 du clapet anti-odeur 1. La première membrane est agencée pour obstruer au moins la partie supérieure du clapet.

Dans un mode de réalisation, la première membrane 7 obstrue complètement la première extrémité 3 ce qui permet de mieux assurer l'étanchéité dans la première zone 6, c'est-à-dire la partie inférieure du clapet qui est la zone la plus utilisée.

Dans une variante de réalisation, la première membrane 7 n'obstrue pas la première zone 6 ce qui permet d'être plus réactif à des faibles débits de fluide se trouvant dans la première zone 6.

La deuxième membrane 8 est quant à elle configurée pour obstruer partiellement la première extrémité 3 dans la deuxième zone 6, et elle est avantageusement montée mobile en rotation suivant un deuxième axe CC orthogonal à l'axe longitudinal AA du corps 2. Avantageusement, le premier axe BB est différent du deuxième axe CC. Le deuxième axe CC peut par exemple être placé dans la deuxième zone 6, et être positionné de façon à permettre une ouverture maximale du clapet anti-odeur 1 lorsque des eaux pluviales doivent être évacuées.

La deuxième membrane 8 obstrue une partie inférieure de la première extrémité 3, ici la deuxième zone 6, et laisse libre une partie supérieure de la première extrémité 3, ici la première zone 5. Lorsqu'un faible débit est appliqué à l'entrée de la canalisation, ce dernier appuie contre la deuxième membrane 8 afin de traverser le clapet en provenance de la deuxième extrémité. Lorsque qu'un débit beaucoup plus important est appliqué. Ce dernier appuie contre la deuxième membrane 8 afin de traverser le clapet en provenance de la deuxième extrémité et le surplus passe la zone non obstruée afin de ne pas gêner l'écoulement. Définir une zone non obstruée permet de faciliter l'écoulement lorsque les débits sont importants.

Le surplus de débit appuie contre la première membrane 7 afin de traverser le clapet.

Dans un mode de réalisation avantageux, la deuxième membrane 8 obstrue la moitié inférieure de la première extrémité et laisse libre la moitié supérieure de la première extrémité 3.

Les première et deuxième membranes 7 et 8 sont agencées de sorte que la première membrane 7 permette la rotation de la deuxième membrane 8 selon le deuxième axe CC. Ceci garantit le bon fonctionnement du clapet anti-odeur 1.

Lorsque le clapet anti-odeur 1 comporte deux membranes 7 et 8, on peut imaginer que les premier et deuxième axes BB et CC soient parallèles l'un à l'autre, et que le deuxième axe CC soit sécant avec l'axe longitudinal AA du corps cylindrique 2.

Dans un mode de réalisation particulier, la première membrane 7 peut occuper toute la surface de la première extrémité 3 et donc obstruer à elle seule toute la première extrémité 3 du corps cylindrique 2. Ainsi, dans la deuxième zone 6, la première membrane 7 recouvre la deuxième membrane 8. De cette façon, l'étanchéité du clapet anti-odeur 1 n'en est que meilleure. En effet, seul un flux de liquide permet de faire tourner les première et deuxième membranes 7 et 8, un flux d'air tel qu'un courant d'air dans la canalisation n'est pas suffisant pour y parvenir.

Dans un mode de réalisation particulier, la première membrane 7 et la deuxième membrane 8 sont directement fixées sur le corps 2. Dans la variante de réalisation illustrée, la première extrémité 3 du corps cylindrique 2, est séparée de la première membrane 7 par la deuxième membrane 8. Avantageusement, la première membrane 7 est fixée sur la deuxième membrane 8.

Selon une alternative de réalisation représentée sur les figures, le clapet anti-odeur 1 peut être doté d'au moins une troisième membrane 9. Celle-ci peut par exemple être située entre la première membrane 7 et la deuxième membrane 8 selon l'axe longitudinal.

Par ailleurs, pour garantir une bonne étanchéité du clapet anti-odeur 1 et éviter que des mauvaises odeurs s'échappent de la canalisation, la première membrane 7, la deuxième membrane 8 et la troisième membrane 9 sont agencées de sorte à obstruer complètement la première extrémité 3 du corps cylindrique 2. Un flux d'air en provenance du circuit d'eaux usées est donc bloqué par les membranes.

La troisième membrane 9 est avantageusement montée mobile en rotation selon un troisième axe DD qui est orthogonal à l'axe longitudinal AA du corps cylindrique 2, et le troisième axe DD est avantageusement placée dans une troisième zone 10 séparant les première et deuxième zones 5 et 6.

Selon un mode de réalisation spécifique, les axes BB, CC, et DD peuvent être parallèles entre eux. De manière avantageuse, les axes BB, CC, et DD sont distincts.

Pour garantir une bonne évacuation des eaux pluviales, la première membrane 7 et la troisième membrane 9 permettent la rotation de la deuxième membrane 8 selon son axe de rotation CC. Par ailleurs la première membrane 7 permet la rotation de la troisième membrane selon son axe DD. De cette façon, la première extrémité du clapet anti-odeur 1 peut s'ouvrir lorsque des eaux pluviales parviennent jusqu'au clapet. Il est avantageux de placer l'axe DD entre les axes BB et CC.

Dans un mode de réalisation avantageux, la deuxième membrane 8 est configurée pour obstruer le tiers inférieur de la première extrémité 3. La troisième membrane est configurée pour obstruer le tiers intermédiaire de la première extrémité 3, la première membrane 7 est configurée pour obstruer le tiers supérieur de la première extrémité 3. La deuxième zone 6 et la troisième zone 10 peuvent par exemple avoir des largeurs identiques, le premier axe BB peut être situé au voisinage de l'extrémité où le corps 2 a une longueur minimale, le deuxième axe CC peut être situé à la jonction entre les troisième et deuxième zones 10 et 6, et le troisième axe DD peut être situé à la jonction entre les première et troisième zones 5 et 10.

Selon une alternative de réalisation, la première membrane 7 peut recouvrir la deuxième membrane 8 et la troisième membrane 9 de sorte à obstruer à elle seule la première extrémité 3 du corps cylindrique 2. Cette configuration permet d'assurer une bonne étanchéité notamment dans la partie inférieure du clapet.

Il est également possible de prévoir que la première membrane 7 recouvre uniquement la troisième membrane 9. Cette configuration permet d'être plus sensible à un faible débit appuyant sur la deuxième membrane obstruant dans la partie inférieure du clapet.

Selon les modes de réalisation, la troisième membrane 9 peut recouvrir totalement ou partiellement la deuxième membrane 8. Dans cette configuration le passage d'un flux de liquide en direction du circuit d'eaux usées est possible tandis que le passage d'un flux d'air en provenance du circuit d'eaux usées est impossible.

Dans un mode de réalisation avantageux, la deuxième membrane 8 est formée par un film reproduisant la forme de la première extrémité biseautée de manière à complètement obturer la première extrémité biseautée. Un orifice traversant est formé de manière à définir la partie non obstruée. L'orifice définit un anneau dont l'épaisseur est variable. La troisième membrane peut être formée de la même manière.

Ce mode de réalisation est particulièrement avantageux car il permet de réaliser simplement l'empilement des aux moins deux membranes. Les problèmes de fuites sont réduits car les membranes sont empilées les unes sur les autres sur tout le pourtour du corps.

Le bon fonctionnement du clapet anti-odeur 1 est également garanti par le biseau formé dans la première extrémité 3 du corps cylindrique 2. En effet, si la première extrémité 3 du corps cylindrique 2 était contenue dans un plan orthogonal à l'axe longitudinal AA du corps cylindrique 2, les membranes seraient plus sensibles aux efforts et une légère déformation de la membrane avec le temps pourrait se traduire par un défaut d'étanchéité. Le clapet ne jouerait pas correctement son rôle. Un appliquant un biseau, le poids de la chaque membrane a pour effet de ramener la membrane en contact avec le corps cylindrique 2 et ainsi obturer le clapet anti-odeur 1. Un angle très faible permet de favoriser la fermeture du clapet.

De manière avantageuse, la première extrémité biseautée 3 peut former un angle compris entre 5 et 45 degrés par rapport à un plan orthogonal à l'axe longitudinal AA du corps cylindrique 2. Cette gamme permet une adaptation aisée sur de nombreuses canalisations ayant un angle d'inclinaison classique et pour des matériaux conventionnels.

Si l'angle est inférieur à 5 degrés, il apparaît que dans certains cas de figure, l'angle d'inclinaison de la canalisation compense en partie l'angle défini par le biseau. Il est alors possible qu'en vieillissant, les membranes puissent se décaler et ne plus obturer le clapet anti-odeur 1. Si l'angle est supérieur à 45 degrés, les membranes se reposent trop sur la première extrémité 3 du clapet. Cela peut entraîner une déformation accélérée des membranes obturant le clapet anti-odeur 1.

La plage angulaire 10-45 degrés est bien adaptée. Dans cette gamme, un flux d'eau peut faire bouger les membranes et peut donc être évacué vers le circuit d'évacuation des eaux usées. La gamme 20-45 degrés peut être bien adaptée pour un clapet comprenant deux membranes, tandis que la gamme 10-20 degrés est plus adaptée pour un clapet comprenant trois membranes. Par exemple, lorsque le clapet comporte trois membranes, un biseau de 15 degrés peut être idéal.

Ces plages angulaires peuvent toutefois être modulées en fonction de la densité des matériaux utilisés pour réaliser les membranes. Si le matériau utilisé pour fabriquer les membranes est très léger, il peut être utile de positionner quatre ou cinq membranes l'une sur l'autre afin de garantir l'étanchéité. A l'inverse, si le matériau utilisé pour fabriquer les membranes est très dense, deux membranes peuvent être suffisantes pour garantir le bon fonctionnement du clapet, et ce, quel que soit l'angle du biseau.

Selon un mode de réalisation avantageux, les membranes peuvent être réalisées dans un matériau souple, choisi parmi les élastomères. Le caoutchouc styrène-butadiène, le caoutchouc d'éthylène-propylène-diène, les élastomères thermoplastiques et les élastomères fluorés sont particulièrement bien adaptés pour former les membranes.

Le fait que le matériau soit souple permet de faciliter les mouvements des membranes lorsque des eaux pluviales doivent être évacuées.

Lorsque les membranes sont réalisées dans l'un des matériaux qui viennent d'être cités, il est particulièrement intéressant de réaliser un biseau de 15 degrés, et d'utiliser trois membranes dont les axes de rotation sont équidistants.

La deuxième membrane 8 peut tout d'abord être collée sur le bord du corps cylindrique 2 dans les première et troisième zones 5 et 10, et découpée de sorte à laisser les première et troisième zones 5 et 10 de la première extrémité 3 complètement ouvertes, et à obturer la deuxième zone 6.

La troisième membrane 9 peut ensuite être collée au-dessus de la deuxième membrane 8 sur le bord du corps cylindrique dans la première zone 5. Elle est avantageusement découpée afin de laisser la première zone complètement ouverte, tout en obstruant les troisième et deuxième zones 10 et 6 de la première extrémité 3.

Enfin la première membrane 7 peut être collée au dessus de la troisième membrane 9, à l'extrémité de la première zone 5, là où le corps cylindrique 2 a une longueur minimale.

Pour faciliter la mise en place du clapet anti-odeur 1, le corps cylindrique 2 peut être réalisé dans un matériau souple choisi dans la famille des élastomères, en particulier parmi le caoutchouc styrène-butadiène, le caoutchouc d'éthylène-propylène-diène, les élastomères thermoplastiques et les élastomères fluorés. Le choix d'un tel matériau permet de s'adapter aux éventuels défauts de fabrication de la canalisation, et donc d'éviter toute fuite de liquide et/ou de mauvaises odeurs entre la paroi interne de la canalisation et la paroi externe du clapet anti-odeur 1.

La mise en place du clapet anti-odeur 1 peut également être facilitée par l'ajout d'un rebord 11 positionné sur la deuxième extrémité 4 du corps cylindrique 2. Le rebord 11 fait avantageusement saillie, et fait donc office de butée lorsqu'un utilisateur positionne le clapet anti-odeur 1 à l'entrée d'une canalisation. Si l'utilisateur s'assure que le rebord 11 est en butée sur toute la périphérie de la canalisation, alors il est certain que le clapet anti-odeur 1 est correctement positionné.

Le rebord 11 peut être équipé d'un repère (non représenté) qui doit être placé au point le plus haut de la canalisation afin de s'assurer que le clapet anti-odeur 1 est bien positionné et qu'il est dans une configuration optimale de fonctionnement.

Afin de faciliter la fabrication du clapet anti-odeur 1, le rebord 11 peut être réalisé dans un matériau identique au matériau du corps cylindrique 2. L'ensemble composé du corps cylindrique 2 et du rebord 11 peut alors être fabriqué par moulage par exemple.

Le clapet anti-odeur 1 peut par ailleurs être équipé d'une bague (non représentée) positionnée sur la paroi interne du corps cylindrique 2, la bague étant configurée pour assurer l'étanchéité du clapet anti-odeur 1 lorsqu'il est positionné dans la canalisation. La taille de la bague peut avantageusement être ajustée en fonction de la taille de la canalisation. S'il existe un jeu entre le corps cylindrique 2 et la canalisation, il est envisageable que la bague soit légèrement plus large que la paroi interne du corps cylindrique 2, de sorte à forcer l'écartement du corps cylindrique 2 et à assurer l'étanchéité du clapet anti-odeur 1. Par légèrement plus large, on entend que la différence de diamètre entre la bague et la paroi interne du corps cylindrique 2 est au maximum comprise entre 5 mm et 20 mm en fonction des dimensions du clapet anti-odeur 1. Cette différence de taille est autorisée en raison de la souplesse du matériau utilisé pour fabriquer le corps cylindrique. Pour des différences de tailles plus élevées, la paroi du corps cylindrique 2 pourrait être fragilisée et donc restreindre la durée de vie du clapet anti-odeur 1.

Un clapet anti-odeur 1 tel qu'il vient d'être décrit est donc facile à fabriquer, et facile à installer. L'entretien de la canalisation et du bassin de réception des eaux pluviales n'est pas entravé par la présence du clapet anti-odeur 1, ce dernier pouvant être enlevé puis remis dans la canalisation très facilement. Il n'est pas nécessaire d'avoir recours à des professionnels des travaux publics pour installer ou remplacer le clapet anti-odeur 1, ce qui est particulièrement intéressant pour les municipalités qui souhaitent équiper leurs communes de tels dispositifs. Cette configuration est particulièrement avantageuse car le clapet anti-odeur est placé dans la canalisation ce qui facilite son utilisation.

## Revendications

1. Clapet anti-odeur (1) comprenant :
• un corps cylindrique (2) comprenant une première extrémité biseautée (3) dotée de première et deuxième zones (5, 6) opposées, ledit clapet anti-odeur étant **caractérisé par**:
• au moins une première membrane (7) et une deuxième membrane (8) agencées de sorte à pouvoir obstruer complètement la première extrémité biseautée (3) du corps cylindrique (2),
• la première membrane (7) étant configurée pour obstruer au moins partiellement la première extrémité biseautée (3) dans la première zone (5), la première membrane (7) étant montée mobile en rotation suivant un premier axe (BB) orthogonal à l'axe longitudinal (AA) du corps cylindrique (2),
• la deuxième membrane (8) étant configurée pour obstruer partiellement la première extrémité biseautée (3) dans la deuxième zone (6), la deuxième membrane (8) étant montée mobile en rotation selon un deuxième axe (CC) orthogonal à l'axe longitudinal (AA) du corps cylindrique (2), le deuxième axe (CC) étant placé dans la deuxième zone (6),
la première membrane (7) étant configurée pour autoriser la rotation de la deuxième membrane (8) selon le deuxième axe (CC).

2. Clapet anti-odeur (1) selon la revendication 1, dans lequel la première membrane (7) obstrue complètement la première extrémité biseautée (3).

3. Clapet anti-odeur (1) selon l'une quelconque des revendications 1 ou 2, dans lequel le corps cylindrique (2) est séparé de la première membrane (7) par la deuxième membrane (8).

4. Clapet anti-odeur (1) selon l'une quelconque des revendications 1 à 3, dans lequel la première extrémité biseautée (3) forme un angle compris entre 5 et 45 degrés par rapport à un plan orthogonal à l'axe longitudinal (AA) du corps cylindrique (2), préférentiellement compris entre 10 et 45 degrés, et idéalement égal à 15 degrés.

5. Clapet anti-odeur (1) selon l'une quelconque des revendications 1 à 4, dans lequel les première et deuxième membranes (7, 8) sont réalisées dans un matériau souple choisi parmi les élastomères, et préférentiellement parmi le caoutchouc styrène-butadiène, le caoutchouc d'éthylène-propylène-diène, les élastomères thermoplastiques et les élastomères fluorés.

6. Clapet anti-odeur (1) selon l'une quelconque des revendications 1 à 5, dans lequel le corps cylindrique (2) est réalisé dans un matériau souple choisi parmi les élastomères, et préférentiellement parmi le caoutchouc styrène-butadiène, le caoutchouc d'éthylène-propylène-diène, les élastomères thermoplastiques et les élastomères fluorés.

7. Clapet anti-odeur (1) selon l'une quelconque des revendications 1 à 6, comprenant un rebord (11) positionné à une deuxième extrémité (4) du corps cylindrique (2) opposée à la première extrémité (3).

8. Clapet anti-odeur (1) selon la revendication 7, dans lequel le rebord (11) est réalisé dans un matériau identique au matériau du corps cylindrique (2).

9. Clapet anti-odeur (1) selon l'une quelconque des revendications 1 à 8, comportant au moins une troisième membrane (9) positionnée entre les première et deuxième membranes (7, 8),
• la troisième membrane (9) étant montée mobile en rotation selon un troisième axe (DD) orthogonal à l'axe longitudinal (AA) du corps cylindrique (2), le troisième axe (DD) étant placé dans une troisième zone (10) comprise entre la première zone (5) et la deuxième zone (6),
• la première membrane (7) et la troisième membrane (9) étant configurées pour autoriser la rotation de la deuxième membrane (8) selon le deuxième axe (CC),
• la première membrane (7) étant configurée pour autoriser la rotation de la troisième membrane (9) selon le troisième axe (DD),
• la première membrane (7), la deuxième membrane (8) et la au moins troisième membrane (9) étant agencées de sorte à pouvoir obstruer complètement la première extrémité (3) du corps cylindrique (2).

10. Clapet anti-odeur (1) selon la revendication 9, dans lequel la troisième membrane (9) est réalisée dans un matériau identique au matériau des première et deuxième membranes (7, 8).

11. Clapet anti-odeur (1) selon l'une quelconque des revendications 1 à 10, comportant une bague positionnée sur la paroi interne du corps cylindrique (2), la bague étant configurée pour assurer l'étanchéité du clapet anti-odeur (1) lorsqu'il est positionné dans une canalisation.

## Patentansprüche

1. Geruchshemmendes Ventil (1), umfassend:
• einen zylindrischen Körper (2), der ein erstes abgeschrägtes Ende (3) umfasst, welches mit sich gegenüberliegenden ersten und zweiten Bereichen (5, 6) versehen ist,
wobei das geruchshemmende Ventil durch Folgendes gekennzeichnet ist:
• mindestens eine erste Membran (7) und eine zweite Membran (8), die derart angeordnet sind, dass sie das erste abgeschrägte Ende (3) des zylindrischen Körpers (2) vollständig verschließen können,
• wobei die erste Membran (7) derart ausgelegt ist, dass sie das erste abgeschrägte Ende (3) in dem ersten Bereich (5) mindestens teilweise verschließt, wobei die erste Membran (7) derart angebracht ist, dass sie sich um eine erste Achse (BB) drehen kann, welche rechtwinklig zur Längsachse (AA) des zylindrischen Körper (2) ist,
• wobei die zweite Membran (8) derart angebracht ist, dass sie das erste abgeschrägte Ende (3) in dem zweiten Bereich (6) teilweise verschließt, wobei die zweite Membran (8) derart angebracht ist, dass sie sich um eine zweite Achse (CC) drehen kann, welche rechtwinklig zur Längsachse (AA) des zylindrischen Körpers (2) ist, wobei die zweite Achse (CC) in dem zweiten Bereich (6) angeordnet ist,
wobei die erste Membran (7) derart ausgelegt ist, dass sie die Drehbewegung der zweiten Membran (8) um die zweite Achse (CC) ermöglicht.

2. Geruchshemmendes Ventil (1) nach Anspruch 1, wobei die erste Membran (7) das erste abgeschrägte Ende (3) vollständig verschließt.

3. Geruchshemmendes Ventil (1) nach einem beliebigen der Ansprüche 1 oder 2, wobei der zylindrische Körper (2) durch die zweite Membran (8) von der ersten Membran (7) getrennt ist.

4. Geruchshemmendes Ventil (1) nach einem beliebigen der Ansprüche 1 bis 3, wobei das erste abgeschrägte Ende (3) mit einer Ebene, die rechtwinklig zur Längsachse (AA) des zylindrischen Körpers (2) ist, einen Winkel einschließt, welcher im Bereich von 5 bis 45 Grad, vorzugsweise im Bereich von 10 bis 45 Grad, liegt und idealerweise gleich 15 Grad ist.

5. Geruchshemmendes Ventil (1) nach einem beliebigen der Ansprüche 1 bis 4, wobei die erste und die zweite Membran (7, 8) aus einem nachgiebigen Material hergestellt sind, welches aus den Elastomeren, und zwar vorzugsweise aus Styrol-Butadien-Kautschuk, Ethylen-Propylen-Dien-Kautschuk, aus den thermoplastischen Elastomeren und aus den fluorierten Elastomeren ausgewählt ist.

6. Geruchshemmendes Ventil (1) nach einem beliebigen der Ansprüche 1 bis 5, wobei der zylindrische Körper (2) aus einem nachgiebigen Material hergestellt sind, welches aus den Elastomeren, und zwar vorzugsweise aus Styrol-Butadien-Kautschuk, Ethylen-Propylen-Dien-Kautschuk, aus den thermoplastischen Elastomeren und aus den fluorierten Elastomeren ausgewählt ist.

7. Geruchshemmendes Ventil (1) nach einem beliebigen der Ansprüche 1 bis 6, wobei es eine Kante (11) umfasst, die an einem zweiten Ende (4) des zylindrischen Körper (2) angeordnet ist, welches dem ersten Ende (3) gegenüberliegt.

8. Geruchshemmendes Ventil (1) nach Anspruch 7, wobei die Kante (11) aus einem Material hergestellt ist, welches mit dem Material des zylindrischen Körpers (2) identisch ist.

9. Geruchshemmendes Ventil (1) nach einem beliebigen der Ansprüche 1 bis 8, das mindestens eine dritte Membran (9) umfasst, welche zwischen der ersten und der zweiten Membran (7, 8) angeordnet ist,
• wobei die dritte Membran (9) derart angebracht ist, dass sie sich um eine dritte Achse (DD) drehen kann, die rechtwinklig zur Längsachse (AA) des zylindrischen Körpers (2) ist, wobei die dritte Achse (DD) in einem dritten Bereich (10) angeordnet ist, welcher sich zwischen dem ersten Bereich (5) und dem zweiten Bereich (6) befindet,
• wobei die erste Membran (7) und die dritte Membran (9) derart ausgelegt sind, dass sie die Drehbewegung der zweiten Membran (8) um die zweite Achse (CC) ermöglichen,
• wobei die erste Membran (7) derart ausgelegt ist, dass sie die Drehbewegung der dritten Membran (9) um die dritte Achse (DD) ermöglicht,
• wobei die erste Membran (7), die zweite Membran (8) und die mindestens dritte Membran (9) derart angeordnet sind, dass sie das erste Ende (3) des zylindrischen Körpers (2) vollständig verschließen können.

10. Geruchshemmendes Ventil (1) nach Anspruch 9, wobei die dritte Membran (9) aus einem Material hergestellt ist, das mit dem Material der ersten und der zweiten Membran (7, 8) identisch ist.

11. Geruchshemmendes Ventil (1) nach einem beliebigen der Ansprüche 1 bis 10, das einen Ring aufweist, welcher an der Innenwand des zylindrischen Körpers (2) angeordnet ist, wobei der Ring derart ausgelegt ist, dass er die Dichtigkeit des geruchshemmenden Ventils (1) gewährleistet, wenn dieses in einer Rohrleitung angeordnet ist.

## Claims

1. Anti-odour valve (1) comprising:
• a cylindrical body (2) comprising a bevelled first end (3) provided with opposite first and second areas (5, 6), said anti-odour valve being **characterised by**:
• at least a first membrane (7) and a second membrane (8) arranged so as to be able to completely seal off the bevelled first end (3) of the cylindrical body (2),
• the first membrane (7) being configured to at least partially seal off the bevelled first end (3) in the first area (5), the first membrane (7) being fitted movable in rotation along a first axis (BB) orthogonal to the longitudinal axis (AA) of the cylindrical body (2),
• the second membrane (8) being configured to partially seal off the bevelled first end (3) in the second area (6), the second membrane (8) being fitted movable in rotation along a second axis (CC) orthogonal to the longitudinal axis (AA) of the cylindrical body (2), the second axis (CC) being placed in the second area (6),
the first membrane (7) being configured to allow rotation of the second membrane (8) along the second axis (CC).

2. Anti-odour valve (1) according to claim 1, wherein the first membrane (7) completely seals off the bevelled first end (3).

3. Anti-odour valve (1) according to either one of claims 1 or 2, wherein the cylindrical body (2) is separated from the first membrane (7) by the second membrane (8).

4. Anti-odour valve (1) according to any one of claims 1 to 3, wherein the bevelled first end (3) forms an angle comprised between 5 and 45 degrees with respect to a plane orthogonal to the longitudinal axis (AA) of the cylindrical body (2), preferentially comprised between 10 and 45 degrees, and ideally equal to 15 degrees.

5. Anti-odour valve (1) according to any one of claims 1 to 4, wherein the first and second membranes (7, 8) are made from a flexible material chosen from elastomers, and preferentially from styrene-butadiene rubber, ethylene-propylene-diene rubber, thermoplastic elastomers and fluorinated elastomers.

6. Anti-odour valve (1) according to any one of claims 1 to 5, wherein the cylindrical body (2) is made from a flexible material chosen from elastomers, and preferentially from styrene-butadiene rubber, ethylene-propylene-diene rubber, thermoplastic elastomers and fluorinated elastomers.

7. Anti-odour valve (1) according to any one of claims 1 to 6, comprising a rim (11) positioned at a second end (4) of the cylindrical body (2) opposite the first end (3).

8. Anti-odour valve (1) according to claim 7, wherein the rim (11) is made from an identical material to the material of the cylindrical body (2).

9. Anti-odour valve (1) according to any one of claims 1 to 8, comprising at least a third membrane (9) positioned between the first and second membranes (7, 8),
• the third membrane (9) being fitted movable in rotation along a third axis (DD) orthogonal to the longitudinal axis (AA) of the cylindrical body (2), the third axis (DD) being placed in the third area (10) comprised between the first area (5) and the second area (6),
• the first membrane (7) and the third membrane (9) being configured to allow rotation of the second membrane (8) along the second axis (CC),
• the first membrane (7) being configured to allow rotation of the third membrane (9) along the third axis (DD),
• the first membrane (7), the second membrane (8) and the at least third membrane (9) being arranged so as to be able to completely seal off the first end (3) of the cylindrical body (2).

10. Anti-odour valve (1) according to claim 9, wherein the third membrane (9) is made from an identical material to the material of the first and second membranes (7, 8).

11. Anti-odour valve (1) according to any one of claims 1 to 10, comprising a gasket positioned on the inner wall of the cylindrical body (2), the gasket being configured to perform sealing of the anti-odour valve (1) when the latter is positioned in a pipe.
